# EUROPEAN PATENT APPLICATION

(11) **EP 3 663 962 A1**
(43) Date of publication of application: **10.06.2020**
(21) Application number: 19211493.2
(22) Date of filing: 26.11.2019
(51) Int. Cl.: G06F 40/186, G06F 40/106, G06F 16/958

(54) **WEB PAGE CREATION SUPPORTING APPARATUS AND PROGRAM**

(30) Priority: 06.12.2018 JP 2018229073
(71) Applicant: Casio Computer Co., Ltd., Tokyo 151-8543 (JP)
(72) Inventor: HAYASHI, Teruyoshi, Tokyo, 205-8555 (JP)
(74) Representative: Grünecker Patent- und Rechtsanwälte PartG mbB

(57) **Abstract**

A Web page creation supporting apparatus includes, a first display control unit which displays a plurality of templates for appeal types in a Web page; and a second display control unit which displays a preview of a Web page in which posted information to be posted in the Web page is applied to the template for the appeal type selected from the plurality of templates.

## Description

### BACKGROUND

### Technical Field

The present invention relates to a Web page creation supporting apparatus and a program.

### Background Art

Conventionally, there is a well-known technique to create and to release Web page data on a personal computer (PC) for the purpose of enhancing the effect of promoting cuisine provided by eating and drinking places such as diners and restaurants (hereinafter referred to as simply restaurants).

It is expensive to request the creation of a Web page to a professional such as a Web designer. Therefore, a user such as an owner of a restaurant may want to create the Web page by himself. However, such users usually do not have the technical skills or expertise to create a Web page, and it becomes difficult for such user to create a Web page which is highly effective for promoting the restaurant.

Therefore, for example, JP H10-269297 describes a Web page creation system in which the user may obtain input preference data and the obtained preference data may be pasted to a predetermined template to easily create a Web page.

However, if a template is used in order to create the Web page, the user needs to consider which template will result in a Web page with a high appealing effect and to make a selection which can obtain such effect. Appeal means that the seller has an influence on the needs of the consumer in advertising or sales. Therefore, preferably, the user is able to select (try) the template freely according to the user's purpose and the user is able to easily confirm the Web page in advance.

The purpose of the present invention is to select a template freely according to a purpose and to easily confirm a Web page in advance.

### SUMMARY

To achieve at least one of the abovementioned objects, according to one aspect of the present invention, a Web page creation supporting apparatus includes, a first display control unit which displays a plurality of templates for appeal types in a Web page; and a second display control unit which displays a preview of a Web page in which posted information to be posted in the Web page is applied to the template for the appeal type selected from the plurality of templates.

According to another aspect of the present invention, a program for controlling a computer to perform the following functions: a first display control unit which displays a plurality of templates for appeal types in a Web page; and a second display control unit which displays a preview of a Web page in which posted information to be posted in the Web page is applied to the template for the appeal type selected from the plurality of templates.

### BRIEF DESCRIPTION OF THE DRAWINGS

FIG. 1 is a schematic configuration showing a Web page creation supporting system according to an embodiment of the present invention.
FIG. 2 is a block diagram showing a functional configuration of a Web page management server.
FIG. 3 is a block diagram showing a functional configuration of a terminal apparatus.
FIG. 4A is a diagram showing a user table.
FIG. 4B is a diagram showing a template table.
FIG. 4C is a diagram showing a Web page information table.
FIG. 5 is a flowchart showing a Web page data management process.
FIG. 6 is a flowchart showing a Web page data creation process.
FIG. 7 is a diagram showing a Web page management home screen.
FIG. 8 is a diagram showing a basic information input screen.
FIG. 9 is a diagram showing a template selection screen.
FIG. 10 is a diagram showing a contents input screen.
FIG. 11 is a diagram showing a detailed information input screen.
FIG. 12 is a diagram showing a final confirmation screen.
FIG. 13 is a diagram showing an example of a display of a Web page using a basic template.
FIG. 14 is a diagram showing an example of a display of a Web page using an event appeal template.
FIG. 15 is a diagram showing an example of a display of a Web page using a POP appeal template.
FIG. 16 is a diagram showing an example of a display of a Web page using a concept appeal template.
FIG. 17 is a flowchart showing a Web page update proposal process.

### DETAILED DESCRIPTION OF THE PREFERRED EMBODIMENTS

The embodiments are described in detail with reference to the drawings. The embodiments are not limited to the illustrated examples.

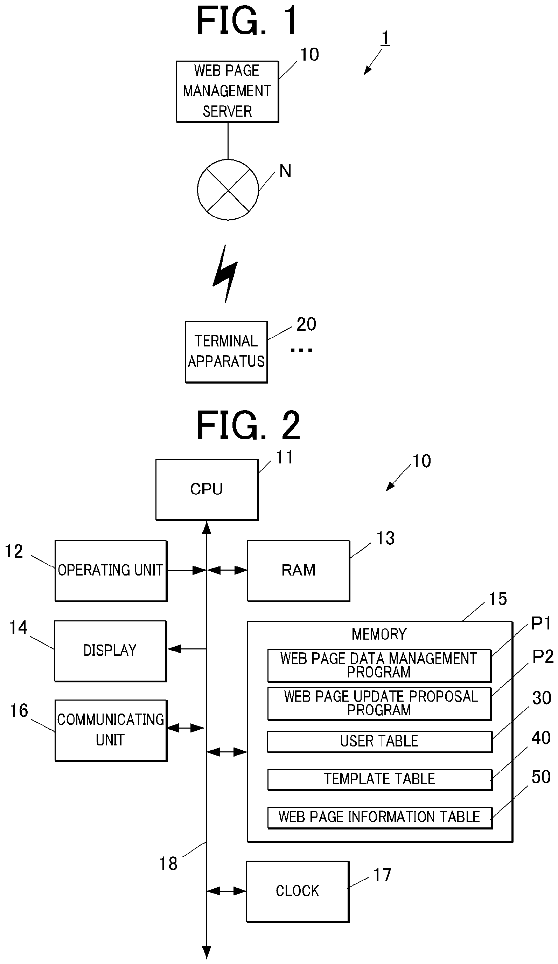

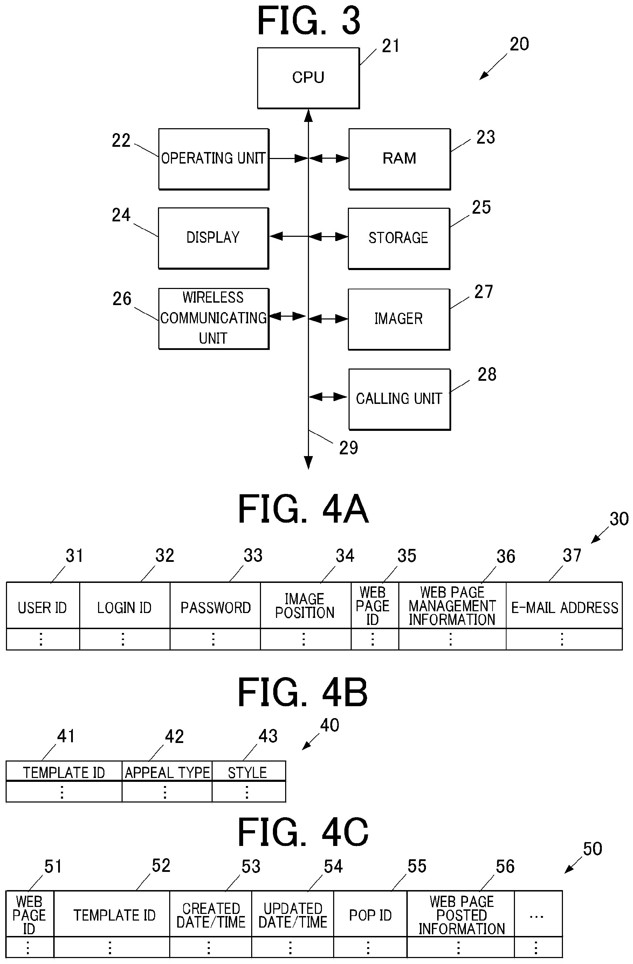

The embodiments are described with reference to FIG. 1 to FIG. 11. The configuration of the apparatus according to the present embodiment is described with reference to FIG. 1 to FIG. 3. FIG. 1 is a schematic configuration showing a Web page creation supporting system 1 according to the present embodiment. FIG. 2 is a block diagram showing a functional configuration of a Web page management server 10. FIG. 3 is a block diagram showing a functional configuration of a terminal apparatus 20.

The Web page creation supporting system 1 according to the present embodiment is a system to support and manage creation of Web page data by a user. As shown in FIG. 1, the Web page creation supporting system 1 includes a Web page management server 10 as a Web page creation supporting apparatus and a terminal apparatus 20. The apparatuses of the Web page creation supporting system 1 are connected to each other to be able to communicate through a communication network N.

According to the present embodiment, the user of the terminal apparatus 20 is an owner or an employee of a restaurant, and the Web page data is data of the released Web page in the restaurant. The user of the terminal apparatus 20 is to be the Webmaster of the Web page. The Web page management server 10 provides the Web page data creation and management service to each user of the plurality of restaurants.

The Web page management server 10 is a server apparatus for creating the Web page data of the Web page for the purpose of disclosing information regarding the restaurant and promoting sales of the provided dishes, and managing the storage and disclosure of the created Web page data. In response to the request from the terminal apparatus 20, the Web page management server 10 transmits to the terminal apparatus 20 display information to create POP data. Further, the input information to create the Web page data is received from the terminal apparatus 20.

The Web page management server 10 includes a function to create and manage POP (here, point of purchase advertisement material or display) data as an advertisement for the purpose of notifying information such as events to be held in the restaurant or promoting sales of the dishes.

The terminal apparatus 20 is a terminal apparatus held by each user, and here, the terminal apparatus 20 is described as a smartphone which is a portable terminal with a relatively small screen. The terminal apparatus 20 is not limited to the above, and may be other terminal apparatuses such as a tablet PC (Personal Computer), notebook PC, desktop PC, or the like. The terminal apparatus 20 receives and displays various display information transmitted from the Web page management server 10. The terminal apparatus 20 also receives input of operation by the user and transmits the operation information to the Web page management server 10.

The communication network N includes the internet and may also include a LAN (Local Area Network) or a WAN (Wide Area Network). The terminal apparatus 20 is connected to the communication network N through wireless communication with a base station or an access point (not shown) on the communication network N.

The Web page creation supporting system 1 may be configured to be able to execute other application programs used by the various terminal apparatuses 20. Such application programs may perform, sales management operation which calculates and analyzes sales according to day or month for each store, accounting management operation which processes taxes such as property tax or individual enterprise tax, payroll managing operation which manages the process of calculating the payroll of the employees, attendance management which manages shifts of personnel in each store or processes attendance management of employees, and document management process which creates and manages notifications to related businesses and employees. Since the Web page creation supporting system 1 can perform the above, the Web page creation supporting system 1 can function as a business management supporting system.

Next, with reference to FIG. 2, the internal configuration of the Web page management server 10 is described. As shown in FIG. 2, the Web page management server 10 includes a CPU (Central Processing Unit) 11 as a first and second display controller, a creating unit, and a proposing unit, an operating unit 12, RAM (Random Access Memory) 13, a display 14, a memory 15, a communicating unit 16, and a clock 17. The units of the Web page management server 10 are connected to each other through a bus 18.

The CPU 11 reads out the program specified from the system program and the application programs stored in the memory 15, deploys the program in the work area of the RAM 13, and controls each unit according to the deployed program.

The operating unit 12 includes a keyboard including cursor keys, character input keys, numeral input keys and various function keys, and a pointing device such as a mouse. The operating unit 12 receives input of which key is pressed by the user or the position pointed by the user, and outputs the information regarding the operation to the CPU 11.

The RAM 13 is a volatile memory. The RAM 13 includes a work area which stores various programs to be executed and data regarding such programs.

The display 14 includes a LCD (Liquid Crystal Display), an EL (Electro Luminescence) display and displays a screen according to a display control signal from the CPU 11.

The memory 15 includes a HDD (Hard Disk Drive), a SSD (Solid State Drive) and the like. The memory 15 stores the system program and the application program executed by the CPU 11. The memory 15 also stores various types of data. Such programs are stored in the memory 15 as a computer readable program code.

The memory 15 also stores a later described Web page data management program PI, a Web page update proposal program P2, a user table 30, a template table 40, a Web page information table 50, image data such as pictures of dishes and the store held by each user, a template used in Web page data creating, and created Web page data. The template stored in the memory 15 is data showing a pattern of the Web page and is a design according to an appeal type for the Web page. The template stored in the memory 15 is created by a professional such as a Web designer.

The communicating unit 16 includes a router and a network card. The CPU 11 transmits and receives data by communicating with the terminal apparatus 20 on the communication network N through the communicating unit 16.

The clock 17 is a real time clock and counts the present date/time. The present date/time information is output to the CPU 11.

Next, with reference to FIG. 3, the internal configuration of the terminal apparatus 20 is described. As shown in FIG. 3, the terminal apparatus 20 includes a CPU 21, an operating unit 22, a RAM 23, a display 24, a memory 25, a wireless communicating unit 26, an imager 27, and a calling unit 28. Each unit of the terminal apparatus 20 is connected through the bus 29.

The CPU 21, the RAM 23, and the display 24 respectively have substantially the same configuration as the CPU 11, the RAM 13, and the display 14 of the Web page management server 10, and the different portions are mainly described.

The CPU 21 reads out the program specified from the system program and the application programs stored in the memory 25, and deploys the program in the work area of the RAM 23. The CPU 21 controls each unit according to the deployed program. Specifically, the CPU 21 displays on the display 24 the various display information received from the Web page management server 10 through the wireless communicating unit 26, and transmits the information input through operation by the user on the operating unit 22 to the Web page management server 10 through the wireless communicating unit 26.

The operating unit 22 is a touch panel provided on a display screen of the display 24. The operating unit 22 receives input of touch from the user and outputs the information regarding the operation to the CPU 21.

The memory 25 includes a nonvolatile memory such as a flash memory. The memory 25 stores various programs executed by the CPU 21 and various data.

The wireless communicating unit 26 includes an antenna, modulation/demodulation circuit, and a signal processing circuit. The wireless communicating unit 26 performs wireless communication with a base station or an access point on the communication network N in a communication format such as mobile communication or wireless LAN communication. The CPU 21 performs communication with the Web page management server 10 on the communication network N through the wireless communicating unit 26.

The imager 27 is a digital camera including an optical system and imaging elements. According to an instruction from the CPU 21, the imager 27 images a subject and generates the image data.

The calling unit 28 includes a microphone, a speaker and the like. For the purpose of calling, the calling unit 28 receives input of the user's voice through the microphone, generates and outputs sound data, and outputs the input sound data from the speaker.

The terminal apparatus 20 includes a power supply such as a battery (not shown) and other than the above, may include configurations such as a near field communication unit.

Next, with reference to FIG. 4A to FIG. 4C, the information stored in the memory 15 of the Web page management server 10 is described. FIG. 4A is a diagram showing a user table 30. FIG. 4B is a diagram showing a template table 40. FIG. 4C is a diagram showing a Web page information table 50.

The user table 30 is a table including information regarding the user. As shown in FIG. 4A, the user table 30 includes columns for a user ID 31, a login ID 32, a password 33, an image position 34, a Web page ID 35, Web page management information 36, and an e-mail address 37.

The user ID 31 is identification information for each user. The login ID 32 is the login ID for the user with the user ID 31. The password 33 is the password corresponding to the login ID 32.

The image position 34 is a storage position in the memory 15 for the image data including the user with the user ID 31. The Web page ID 35 is the identification information of the Web page data for the user with the user ID 31. The Web page management information 36 is information of the storage position in the memory 15 for the Web page data. The e-mail address 37 is the e-mail address of the user with the user ID 31.

The template table 40 is a table storing information regarding the template for creating the Web page data which is stored in the memory 15. As shown in FIG. 4B, the template table 40 includes columns for a template ID 41, an appeal type 42, and a style 43.

The template ID 41 is identification information of the template for the Web page. According to the present embodiment, the Web page in which vertical scrolling is possible is created for being viewed using a PC (personal computer) or a smartphone. The appeal type 42 is a type of purpose of appeal (contents which are to be expressed with high priority for the purpose of attracting customers to the store and promoting sales) for the Web page created using the template with the template ID 41. According to the present embodiment, in the template used in the Web page, the order of the positions in which the pieces of information are posted in the vertical direction and the layout (position of the image and the characters) are different depending on the appeal type.

The appeal type 42 includes, for example, basic, event appeal, POP appeal, concept appeal, and picture appeal. Basic is the appeal type for the purpose of positioning and providing the minimum required information on the restaurant site. The event appeal is the appeal type for the purpose of providing information regarding the event to the user viewing the site to find information regarding the event. The POP appeal is the appeal type for the purpose of using the posted POP data to the full extent and providing the POP data. The concept appeal is the appeal type for the purpose of providing the selling point (concept) such as the commitment to specialties in the store or the product (dish). The picture appeal is the appeal type for the purpose of largely showing each picture of the product (dish) and the store.

The style 43 is a color (color scheme, color shade) as a style of a variation in a template corresponding to the template ID 41 and the appeal type 42. That is, there are templates in which the appeal types 42 are the same but the styles 43 are different. The style 43 is not limited to the variation in which the color scheme of the template is different, and may be variations in which at least one among the following is different, for example, the color scheme of the template, the size of the character in the character string, font, or the background image (for example, pattern). The order of positions in which the pieces of information are posted in the vertical direction is the same in the templates with the same appeal type 42 and the different style 43.

The Web page information table 50 is a table which stores the information regarding the created Web page data. As shown in FIG. 4C, the Web page information table 50 includes columns for a Web page ID 51, a template ID 52, a created date/time 53, an updated date/time 54, a POP ID 55, and Web page posted information 56. The Web page ID 51 is identification information of the created Web page data. The template ID 52 is identification information of the template used in the Web page data with the Web page ID 51.

The created date/time 53 is the date/time information of the date/time that the Web page data with the Web page ID 51 is created. The update date/time 54 is the date/time information of the date/time that the Web page data with the Web page ID 51 is updated. POP ID 55 is the identification information of the POP data posted in the Web page data with the Web page ID 51.

The Web page posted information 56 is information posted on the Web page corresponding to the Web page ID 51, and this is simply shown in one column. Alternatively, this may be shown in a plurality of columns. For example, the Web page posted information 56 includes basic information such as a name of the restaurant to which the user creating the Web page belongs, reading of the name of the restaurant, postal code, address, telephone number, number of seats, and remarks, information regarding the posted main image and logo image, slogan of the restaurant, menu information, whether smoking is permitted, remarks regarding smoking, parking, opening hours, regular holiday, average estimate of payment, method of payment, nearest station, access information, map information, restaurant introduction (concept), remarks regarding restaurant introduction, URL (uniform resource locator) of Web page, released or not, event information, news information and the like.

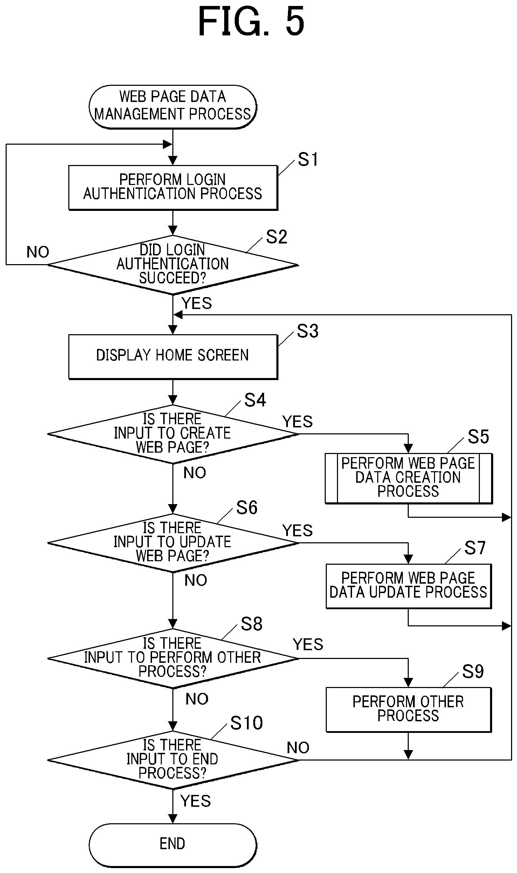

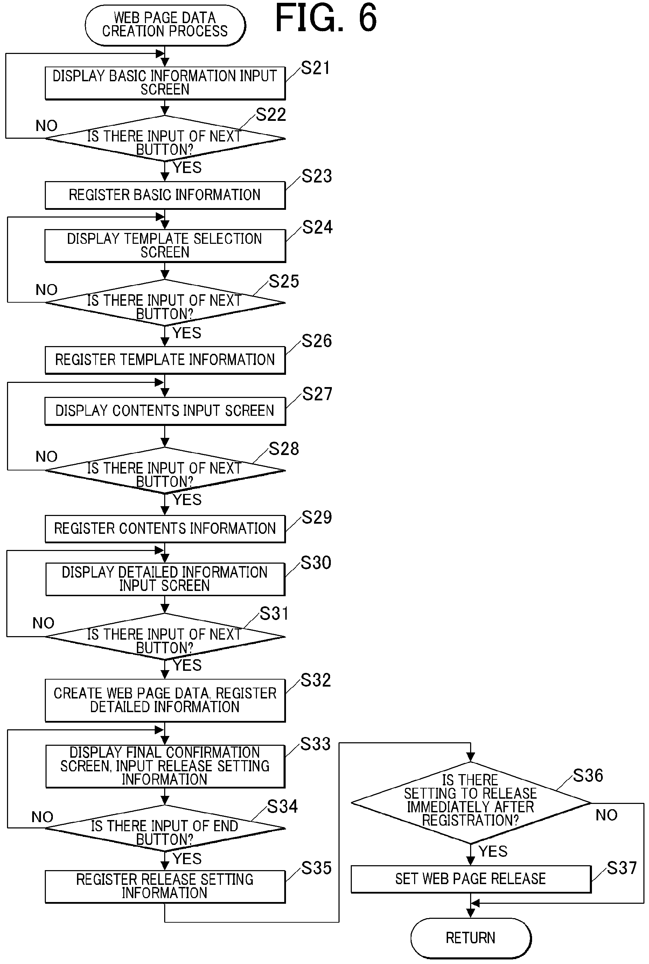

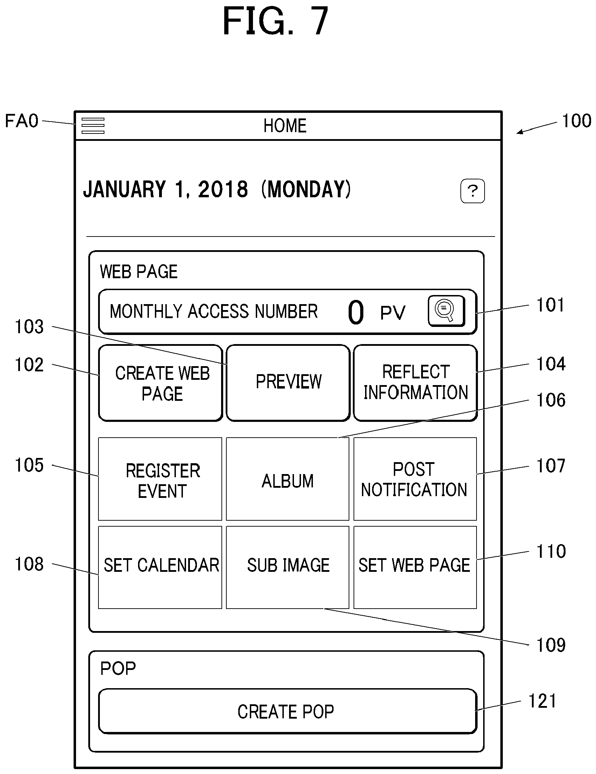

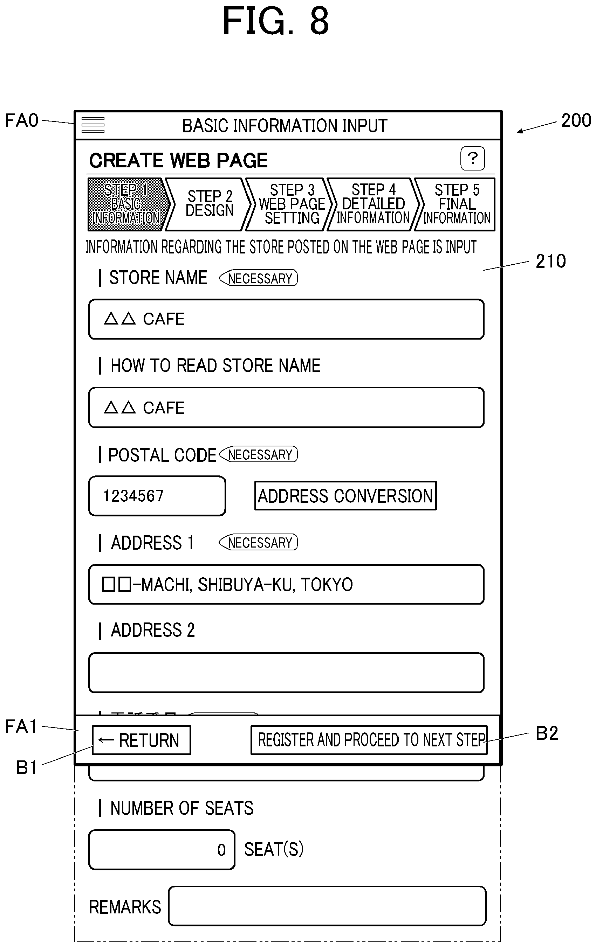

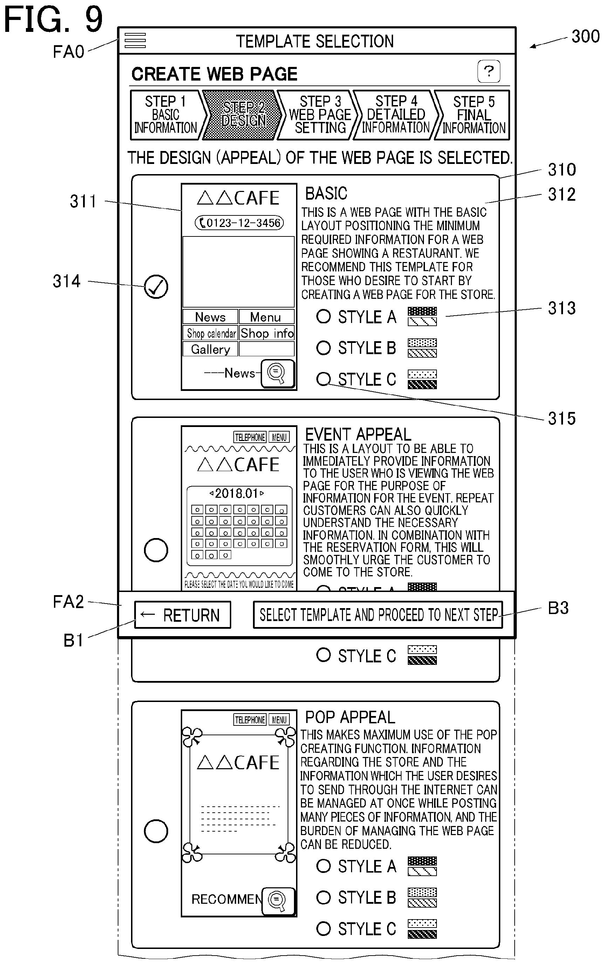

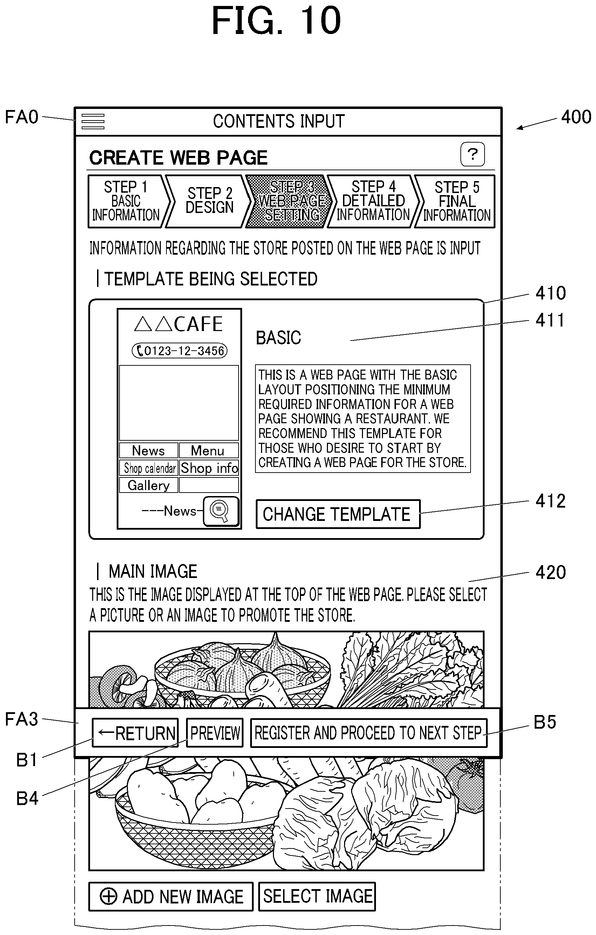

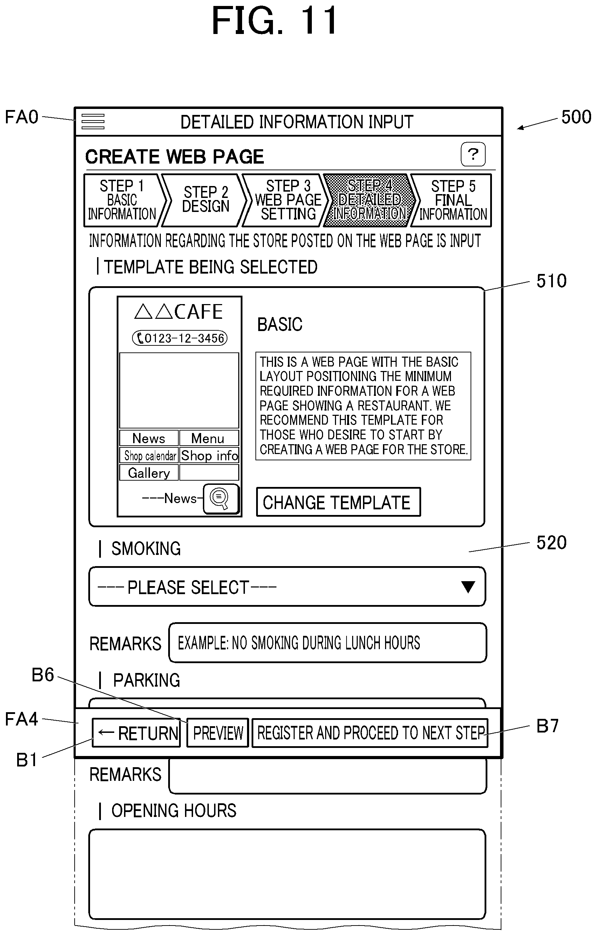

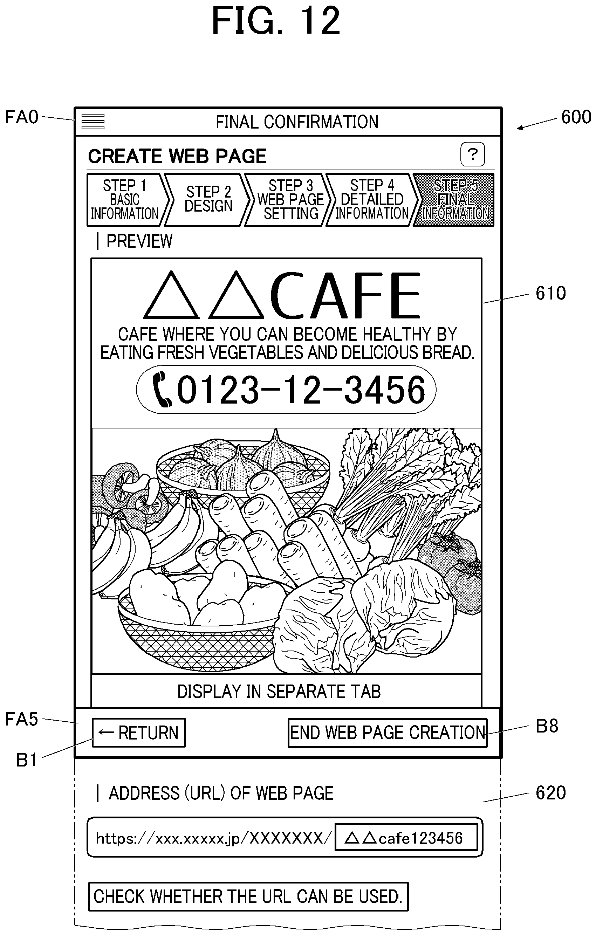

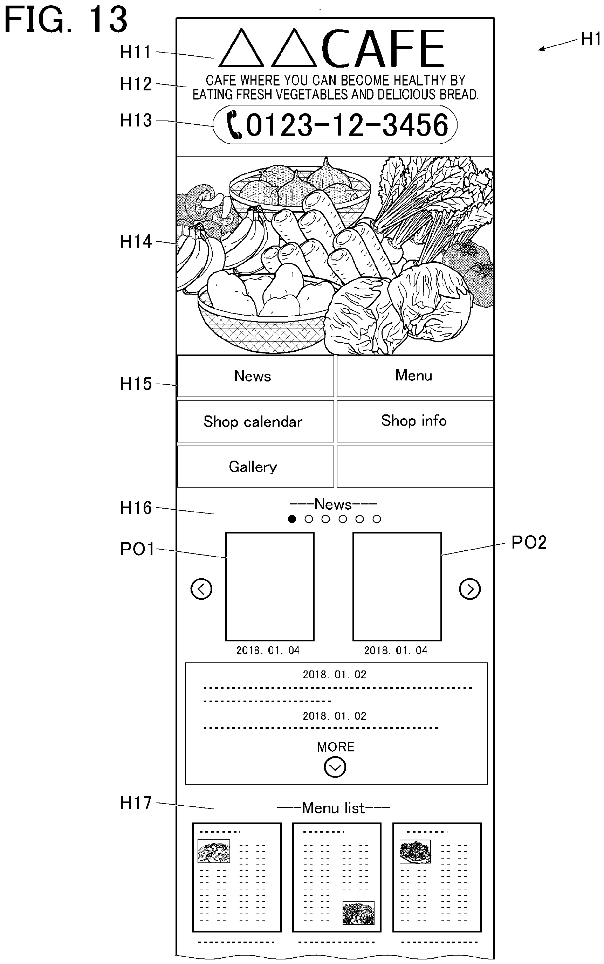

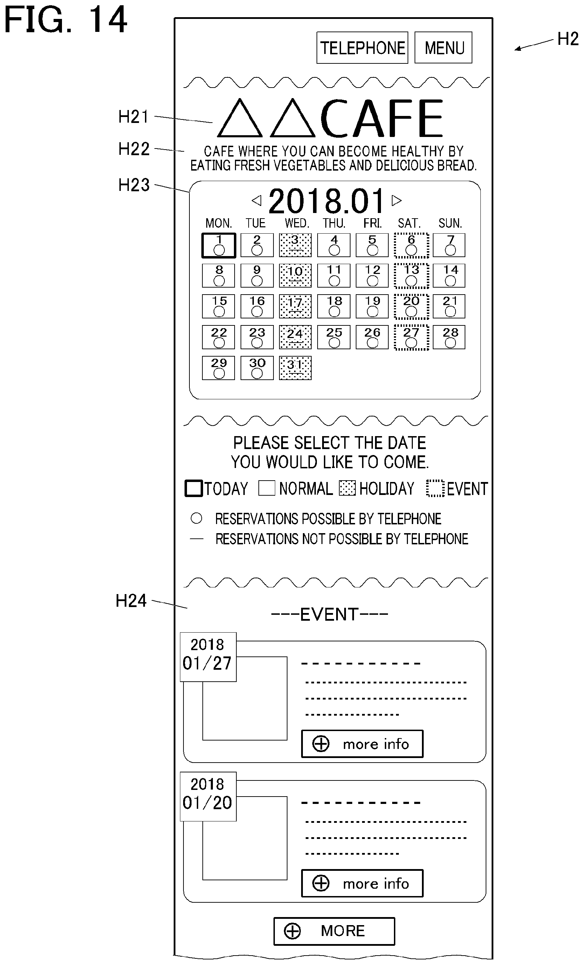

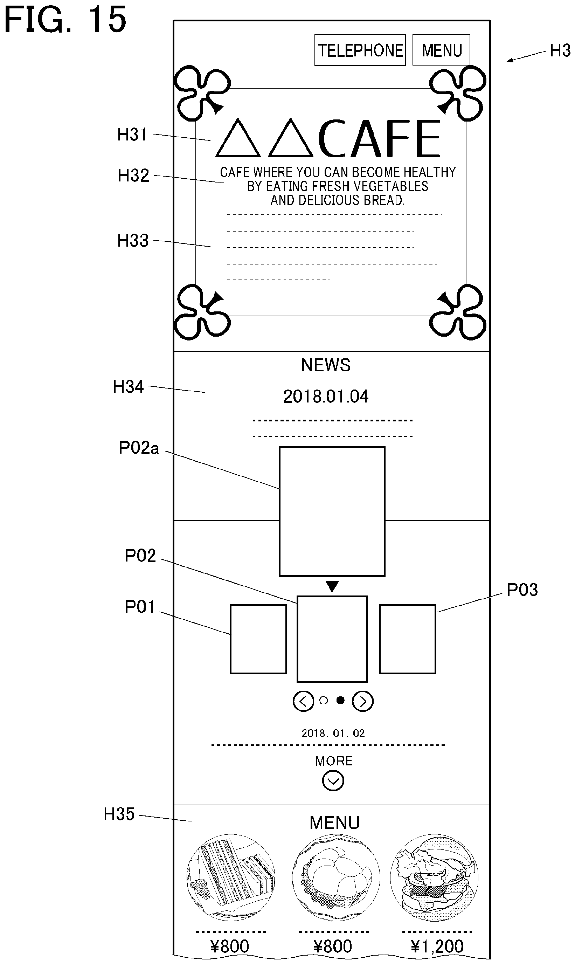

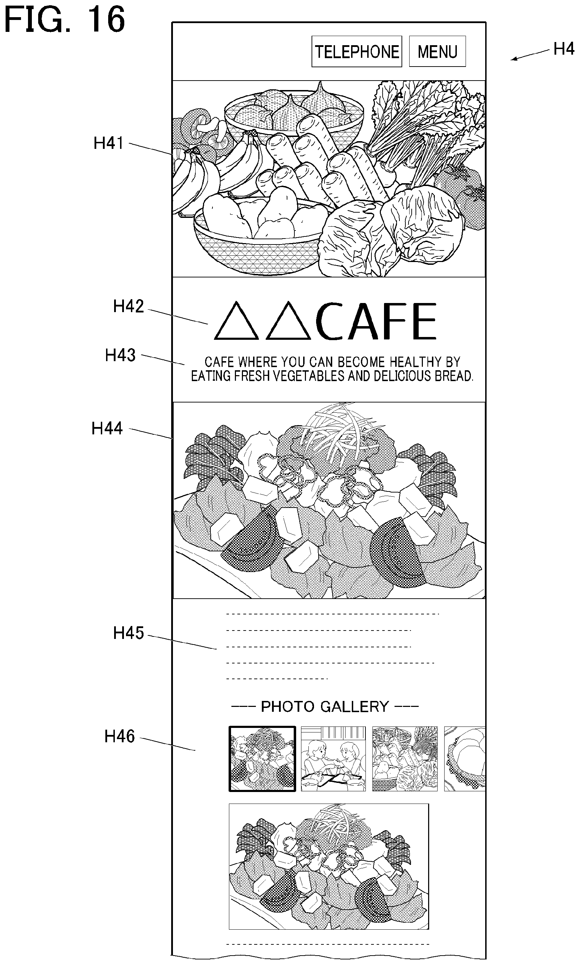

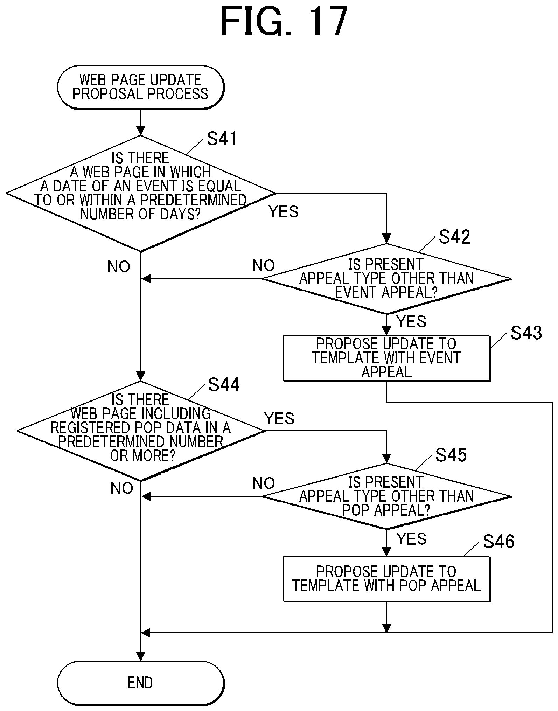

Next, with reference to FIG. 5 to FIG. 17, the operation of the Web page creation supporting system 1 is described. FIG. 5 is a flowchart showing the Web page data management process. FIG. 6 is a flowchart showing a Web page data creation process. FIG. 7 is a diagram showing a Web page management home screen 100. FIG. 8 is a diagram showing a basic information input screen 200. FIG. 9 is a diagram showing a template selection screen 300. FIG. 10 is a diagram showing a contents input screen 400. FIG. 11 is a diagram showing a detailed information input screen 500. FIG. 12 is a diagram showing a final confirmation screen 600. FIG. 13 is a diagram showing a Web page H1 using a basic template. FIG. 14 is a diagram showing a Web page H2 using an event appeal template. FIG. 15 is a diagram showing a Web page H3 using a POP appeal template. FIG. 16 is a diagram showing a Web page H4 using a concept appeal template. FIG. 17 is a flowchart showing a Web page update proposal process.

With reference to FIG. 5 and FIG. 6, the Web page data management process performed by the Web page management server 10 is described. The Web page data management process is a process in which support is provided for the user who logged in when the user creates the Web page data and in which the created Web page data is managed. Here, in the Web page data management process, the Web page management server 10 uses communication through the communication network N to transmit display information to the terminal apparatus 20 operated by the user and to display the information, and to receive input information input by operation by the user on the terminal apparatus 20. Therefore, for the ease of description, the CPU 11 of the Web page management server 10 displays the display information on the display 24 of the terminal apparatus 20 and receives input of the input information from the user through the operating unit 22.

According to the Web page creation supporting system 1, if the user such as the owner of a restaurant inputs on the operating unit 22 of the terminal apparatus 20 held by the user the instruction to execute the Web page data management process, this acts as a trigger for the CPU 11 of the Web page management server 10 to execute the Web page data management process in coordination with a Web page data management program P1 read form the memory 15 and deployed in the RAM 13.

As shown in FIG. 5, first, the CPU 11 creates login screen data and displays the login screen on the display 24. The CPU 11 receives input of the login ID and the password through the operating unit 22. The CPU 11 uses the login ID 32 and the password 33 of the user table 30 stored in the memory 15 and performs login authentication for the user who inputs the login ID and the password (step S1) . Then, the CPU 11 determines whether the login authentication is successful (step S2).

If the login authentication fails (step S2; NO), the process progresses to step S1. If the login authentication succeeds (step S2; YES), the user ID 31 of the login user is determined. The CPU 11 generates the Web page management home screen data and displays the screen on the display 24 (step S3) . In step S3, for example, the Web page management home screen 100 is displayed as shown in FIG. 7.

The Web page management home screen 100 includes a fixed display region FA0, a monthly access number display region 101, a Web page creation button 102, a preview button 103, an information reflection button 104, an event registration button 105, an album button 106, a news registration (notification post) button 107, a calendar setting button 108, a sub image registration button 109, a Web page setting button 110, and a POP creating button 121.

The fixed display region FA0 is a fixed display region positioned in the upper side of the display screen of the display 24. The monthly access number display region 101 is the display region showing the monthly access number (PV: Page View) of the created and released Web page. The Web page creation button 102 is a button which receives input of touch to start the later described Web page creation process. The preview button 103 is a button which receives input of touch to start the preview display process of the created Web page data. The information reflection button 104 is a button which receives input of touch to start the process which reflects the updated information for updating the Web page to the Web page data. The updated information is input by performing the process corresponding to the event registration button 105, the album button 106, the news registration (notification post) button 107, the calendar setting button 108, the sub image registration button 109, and the Web page setting button 110. The information reflection button 104 is a button which receives input to set the release of the Web page later if the Web page is not released after creating the Web page data with the Web page creation button 102.

The event registration button 105 is a button which receives input of touch to start a process to register the event information (event date, contents information, etc.) regarding the restaurant where the user belongs to add the event information to the created Web page data. The album button 106 is a button which receives input of touch to start a process to register and change the image data in the album (the folder of the image data in the memory 15 is expressed as above) storing the image data of the user. The news registration button 107 is a button which receives input of touch to start a process to register news information (news date, contents information, etc.) regarding the restaurant of the user to add the news information to the created Web page data. The calendar setting button 108 is a button which receives input of touch to start a process to register calendar information such as holidays in the calendar posted in the created Web page data.

The sub image registration button 109 is a button which receives input of touch to start a process to register sub image data added to the Web page data including the created main image data. The Web page setting button 110 is a button which receives input of touch to start update information of setting data of the created Web page data. Such setting information includes basic information such as a name of the restaurant to which the user creating the Web page belongs, information regarding the posted image data, menu information of the restaurant, slogan of the restaurant, whether smoking is permitted, remarks regarding smoking, parking, opening hours, regular holiday, average estimate of payment, method of payment, nearest station, access information, map information, restaurant introduction, remarks regarding restaurant introduction, URL of Web page, released or not, and the template (including changing appeal type) can be updated.

The POP creation button 121 is a button which receives input of touch to start a process to create POP data which is printed or posted on the Web page. In the POP data creation process, the CPU 11 combines a template for POP data selected by input with at least character information and image data of a picture to create the POP data. The POP ID is provided and the created POP data is stored in the memory 15. According to the present embodiment, for example, the POP data stored in the memory 15 is included in the Web page data based on the correspondence between the Web page ID 51 and the POP ID 55 in the Web page information table 50.

Returning to FIG. 5, the CPU 11 determines whether the user made an input by touching the Web page creation button 102 on the operating unit 22 (step S4). If there is input by touching the Web page creation button 102 (step S4; YES), the CPU 11 executes the Web page data creation process which creates the Web page data (step S5), and progresses the process to step S3. The Web page data creation process in step S5 is described in detail later.

If there is no input by touching the Web page creation button 102 (step S4; NO), the CPU 11 determines whether the user made the input on the operating unit 22 by touching the event registration button 105, the news registration button 107, the calendar setting button 108, the sub image registration button 109, and the Web page setting button 110 in order to input updated information to update the Web page data.

If there is input by touching the event registration button 105, etc. (step S6; YES), the CPU 11 receives input of various update information corresponding to the button which is touched, the buttons including the event registration button 105, the news registration button 107, the calendar setting button 108, the sub image registration button 109, and the Web page setting button 110 (step S7). Then, the process progresses to step S3.

Corresponding to the event registration button 105, the news registration button 107, the calendar setting button 108, the sub image registration button 109, and the Web page setting button 110, the following information is input as the updated information, event information, news information, calendar information, setting information of the sub image data (storage position, etc.), and the Web page setting information (basic information of the restaurant, information regarding the posted image data, slogan, menu information of the restaurant, whether smoking is permitted, remarks regarding smoking, parking, opening hours, regular holiday, average estimate of payment, method of payment, nearest station, access information, map information, restaurant introduction, remarks regarding restaurant introduction, URL of Web page, released or not).

If there is no input by touching the event registration button 105, etc. (step S6; NO), the CPU 11 determines whether the user made input on the operating unit 22 by touching other buttons such as the preview button 103, the information reflection button 104, the album button 106, or the POP creation button 121 (step S8). If there is input by touching other buttons (step S8; YES), the CPU 11 performs other processes in response to the button touched by input (step S9), and the process progresses to step S3.

If there is input by touching the album button 106 in step S8, in step S9, the CPU 11 adds or updates the image data stored in the memory 15 according to the image position 34 in the user table 30 and the input of operation by the user through the operating unit 22. If there is input by touching the preview button 103 in step S8, the CPU 11 uses the Web page management information 36 of the user table 30 to read the Web page data stored in the memory 15 and to display on the display 24 the preview in step S9.

If there is input by touching the information reflection button 104 in step S8, the CPU 11 reflects the update information input in step S7 to the Web page data stored in the memory 15, stores the update information in the Web page posted information 56 of the Web page information table 50 in the memory 15, and stores the present date/time information obtained from the clock 17 in the updated date/time 54 in step S9. Specifically, if release of the Web page is included in the update information, the CPU 11 stores the Web page data created by the Web page data creation process in step S5 and stored in the memory 15 in the position corresponding to the "Web page address (URL)" (for example, Web page release folder corresponding to the URL in the memory 15) and performs setting to release the Web page to a typical terminal apparatus with the URL. To release the Web page means to enable browsing on not only the terminal apparatus 20 according to the present embodiment but from a typical terminal apparatus such as a PC or a smartphone through the internet of the communication network N.

If there is input by touching the POP creation button 121 in step S8, the CPU 11 creates the POP data in response to the input by the user on the operating unit 22, the POP ID is applied and the created POP data is stored in the memory 15 in step S9.

If there is no input of other buttons (step S8; NO), the CPU 11 determines whether there is input from the user on the operating unit 22 to end the Web page data management process (step S10). If there is no input to end the process (step S10; NO), the process progresses to step S3. If there is input to end the process (step S10; YES), the Web page data management process ends.

Next, with reference to FIG. 6, the Web page data creation process of step S5 is described. First, the CPU 11 creates basic information input screen data and displays the screen on the display 24. The CPU 11 receives the input of the basic information from the user on the operating unit 22 (step S21). In step S21, for example, a basic information input screen 200 as shown in FIG. 8 is displayed.

The basic information input screen 200 includes fixed display regions FA0, FA1, and a basic information input region 210. In the display screen of the display 24, the upper side fixed display region FA0 and the lower side fixed display region FA1 are displayed fixed. A non-fixed display region (basic information input region 210) is displayed between the above, and the non-fixed display region can be displayed in a scrollable state by scrolling in the vertical direction using the operating unit 22. The same applies for the later described template selection screen 300, the contents input screen 400, the detailed information input screen 500, and the final confirmation screen 600.

The basic information input region 210 is a display region which can be scrolled and which receives input of the basic information. For example, the basic information includes a name of the restaurant to which the user creating the Web page belongs, reading of the name of the restaurant, postal code, address, telephone number, number of seats, and remarks.

The fixed display region FA1 includes a return button B1 and a next button B2. The return button B1 is a button which receives input by touching to switch to the display of the screen displayed directly before (for example, in the basic information input screen 200, the Web page management home screen 100). In the Web page data creation process shown in FIG. 6, the description for the process corresponding to the return button B1 is omitted. The next button B2 is a button which receives input by touching to register the basic information input in the basic information input region 210 and to receive input of touching to change to the next screen.

Returning to FIG. 6, the CPU 11 determines whether there is input by the user touching the next button B2 on the operating unit 22 (step S22) . If there is no input by touching the next button B2 (step S22; NO), the process progresses to step S21. If there is input by touching the next button B2 (step S22; YES), the CPU 11 applies the Web page ID of the created Web page. Then, the Web page ID and the basic information input in step S21 are stored and registered by the CPU 11 in the Web page ID 35 of the user ID 31 for the login user in the user table 30, the Web page ID 51 in the Web page information table 50, and the Web page posted information 56 (step S23).

Then, the CPU 11 creates the template selection screen data and displays the screen on the display 24. The CPU 11 receives input of selection of the template from the user on the operating unit 22 (step S24). In step S24, for example, the template selection screen 300 shown in FIG. 9 is displayed.

The template selection screen 300 includes fixed display regions FA0 and FA2 and a template selection region 310 showing each of a plurality of appeal types. The fixed display region FA2 is a fixed display region on the lower side of the display screen on the display 24, and includes a return button B1 and a next button B3.

The template selection region 310 can be scrolled. The template selection region 310 is provided for each appeal type such as basic, event appeal, POP appeal, concept appeal, and picture appeal, and is a region to select the template. The template selection region 310 includes a template display region 311, an appeal type description display region 312, a style display region 313, a check button 314, and a radio button 315.

The template display region 311 is a region which displays the image of the template for the corresponding appeal type. The image of the template in the template display region 311 may reflect the basic information registered in step S23 or may not reflect the basic information.

The appeal type description display region 312 is a region in which the description for the appeal type of the template displayed in the template display region 311 is displayed. The style display region 313 is the region in which a plurality of styles (here, variation in color schemes) which can be selected to be used in the template for the corresponding appeal type is displayed.

The check button 314 is a button (check box) which receives input of touch to select the template for the appeal type displayed in the template display region 311. The radio button 315 is a radio button to receive the input by touching to choose one of the styles (color schemes) displayed in the style display region. According to the input of touching the radio button 315, the style (color scheme) of the template displayed in the template display region 311 changes.

The next button B3 is a button to receive input of touching to register the template selection information input in the template selection region 310 and to switch to the next screen.

Returning to FIG. 6, the CPU 11 determines whether there is input by touching the next button B3 by the user on the operating unit 22 (step S25) . If there is no input by touching the next button B3 (step S25; NO), the process progresses to step S24. If there is input by touching the next button B3 (step S25; YES), the CPU 11 stores and registers in the template ID 52 of the Web page information table 50 the template ID corresponding to the template selection information with the appeal type and style input in step S24 (step S26) .

Then, the CPU 11 creates the contents input screen data and displays the screen on the display 24. The CPU 11 receives input of the contents information regarding the contents posted on the Web page from the user on the operating unit 22 (step S27). In step S27, for example, the contents input screen 400 shown in FIG. 10 is displayed.

The contents input screen 400 includes fixed display regions FA0 and FA3, a template display region 410, and a contents input region 420 for each of the plurality of contents. The fixed display region FA3 is a fixed display region on the lower side of the display screen of the display 24, and includes a return button B1, a preview button B4, and a next button B5.

The template display region 410 is scrollable, and is a region which displays an image and a description of the template registered in step S26. The template display region 410 includes an appeal type description display region 411, and a template change button 412. The template change button 412 is a button which receives input by touching to start the process which received input of change in the registered template. For example, the process to return to step S24 is executed.

The contents input region 420 is scrollable and is provided for each of the contents such as the main image, the logo image, the slogan, and the menu. The contents input region 420 is the region which receives input of the contents information regarding the contents posted on the Web page. In the contents input region 420 of the main image, in response to input of operation from the user on the operating unit 22, the CPU 11 receives input of selection of image data stored in the memory 15 corresponding to the image position 34 of the user table 30 or input of selection of image data to be registered from the added image data, or input of selection of the newly added image data or input of selection of the image data to be registered from the added image data in order to select the image data stored in the memory 25 as the main image.

In the logo image contents input region 420, in response to the input of operation from the user on the operating unit 22, the CPU 11 receives input of selection of newly added image data or image data to be registered from the added image data in order to select the image data stored in the memory 15 corresponding to the image position 34 of the user table 30 or the image data stored in the memory 25 as the logo image. In the contents input region 420 of the slogan, the CPU 11 receives input of characters for the slogan in response to the input of operation by the user on the operating unit 22.

In the contents input region 420 of the menu, in response to the input of operation by the user on the operating unit 22, the CPU 11 receives the input of selection of the menu file created in advance and stored in the memory 15 or the memory 25.

The preview button B4 is a button which receives input of touching on the preview display of the Web page data. If there is input by touching the preview button B4, the CPU 11 creates the preview Web page data using the basic information, template and contents information registered or input in steps S23, S26, and S27 up to this point, and displays the Web page on the display 24.

The next button B5 is a button which receives input by touching to register the contents information input in the contents input region 420 and to switch to the next screen.

Returning to FIG. 6, the CPU 11 determines whether there is input by touching the next button B5 by the user on the operating unit 22 (step S28) . If there is no input by touching the next button B5 (step S28; NO), the process progresses to step S27. If there is input by touching the next button B5 (step S28; YES), the CPU 11 stores and registers contents information input in step S27 (information regarding the image data of the main image and the logo image which are posted, slogan of the restaurant, and menu information) in the Web page posted information 56 of the Web page information table 50 (step S29).

The CPU 11 creates the detailed information input screen data, displays the screen on the display 24, and receives input of the detailed information from the user on the operating unit 22 (step S30). In step S30, for example, the detailed information input screen 500 is displayed as shown in FIG. 11.

The detailed information input screen 500 includes fixed display regions FA0 and FA4, a template display region 510, and a detailed information input region 520 for each of the plurality of detailed information. The fixed display region FA4 is a fixed display region on the lower side of the display screen of the display 24, and includes a return button B1, a preview button B6, and a next button B7.

The template display region 510 is similar to the template display region 410. The detailed information input region 520 is provided for each of the detailed information such as whether smoking is permitted, remarks regarding smoking, parking, opening hours, regular holiday, average estimate of payment, method of payment, nearest station, access information, map information, restaurant introduction, and remarks regarding restaurant introduction. The detailed information input region 520 is a region which receives input of the detailed information posted on the Web page. In the detailed information input region 520 for each of the detailed information, the CPU 11 receives input of characters or input of selection for the detailed information in response to input of operation by the user on the operating unit 22.

The preview button B6 is a button which receives input by touching the preview display of the Web page data. If there is input by touching the preview button B6, the CPU 11 creates Web page data for preview using the basic information, template, contents information, detailed information which are registered or input in steps S23, S26, S29, and S30 up to this point and displays the Web page data on the display 24.

The next button B7 is a button which receives input by touching to register the detailed information input in the detailed information input region 520 and to change to the next screen.

Returning to FIG. 6, the CPU 11 determines whether there is input by touching the next button B7 by the user on the operating unit 22 (step S31) . If there is no input by touching the next button B7 (step S31; NO), the process progresses to step S30. If there is input by touching the next button B7 (step S31; YES), the CPU 11 creates the Web page data using the basic information, template, contents information, and detailed information registered or input in steps S23, S26, S29, and S30, and stores the Web page data in the memory 15. The CPU 11 stores and registers the detailed information in the Web page posted information 56 of the Web page information table 50 (step S32). In step S32, the CPU 11 applies the information to be posted (basic information, image data, contents information (including POP data), detailed information) in the selected template and creates the Web page data.

Then, the CPU 11 creates the final confirmation screen data and displays the screen on the display 24. The CPU 11 receives input of the release setting information of the Web page from the user on the operating unit 22 (step S33). In step S33, for example, the final confirmation screen 600 is displayed as shown in FIG. 12.

The final confirmation screen 600 includes fixed display regions FA0 and FA5, a preview display region 610, and a release setting information input region 620 for each of the plurality of release setting information. The fixed display region FA5 is a fixed display region on the lower side of the display screen of the display 24, and includes a return button B1 and an end button B8.

The preview display region 610 is a display region of the Web page data created in step S32. The release setting information input region 620 is provided for each of the release setting information such as the URL of the Web page and whether the Web page is released or not. The preview display region 610 is a region which receives input of the release setting information regarding the Web page, and specifically, which receives input of setting to "release (Web page data) immediately after registration". In the release setting information input region 620 for each of the release setting information, the CPU 11 receives the input of the character and the input of the selection for the release setting information in response to the operation from the user on the operating unit 22.

The end button B8 is a button which receives input by touching to register the release setting information input in the release setting information input region 620 and to finish the Web page data creation process.

Returning to FIG. 6, the CPU 11 determines whether there is input of touching the end button B8 by the user on the operating unit 22 (step S34) . If there is no input by touching the end button B8 (step S34; NO), the process progresses to step S33. If there is input by touching the end button B8 (step S34; YES), the CPU 11 stores and registers the release setting information input in step S33 in the Web page posted information 56 of the Web page information table 50, and stores the present date/time information obtained from the clock 17 in the created date/time 53 (step S35).

Then, the CPU 11 determines whether "release immediately after registration" is set in the release setting information input in step S33 (step S36). If "release immediately after registration" is not set (step S36; NO), the Web page data creation process ends. If "release immediately after registration" is set (step S36; YES), the CPU 11 stores the created Web page data stored in the memory 15 in step S32 in a position corresponding to the "Web page address (URL)" (for example, folder for release corresponding to the URL of the memory 15), sets the release of the Web page to typical terminal apparatuses on the URL (step S37), and ends the Web page data creation process.

Here, with reference to FIG. 13 to FIG. 16, examples to display the Web page according to the different appeal type created by the Web page data creation process are described.

As shown in FIG. 13, as the Web page with the appeal type as basic, for example, Web page H1 is created. According to the template with the appeal type as basic, the following items are arranged in order vertically from top to bottom in the Web page H1, store name H11, slogan H12, telephone number H13, main image H14, Web page menu H15, news information H16, menu information H17, calendar information (not shown), event information (not shown), shop information (map, basic information, detailed information) (not shown), and gallery (image data) (not shown). The news information H16 includes POP data PO1 and PO2.

As shown in FIG. 14, as the Web page with the appeal type as event appeal, Web page H2 is created. According to the template with the appeal type as event appeal, the following items are arranged in order vertically from top to bottom in the Web page H2, store name H21, slogan H22, calendar information H23, event information H24, gallery (not shown), news information (not shown), menu information (not shown), and shop information (not shown). The calendar information H23 and the event information H24 which are important for appealing the event are positioned in the upper portion of the Web page H2, and the user is able to confirm this information before confirming the other information.

As shown in FIG. 15, as the Web page with the appeal type as POP appeal, for example, Web page H3 is created. According to the template with the appeal type as POP appeal, the following items are arranged in order vertically from top to bottom in the Web page H3, store name H31, slogan H32, store introduction H33, news information H34, menu information H35, gallery (not shown), calendar information (not shown), event information (not shown), and shop information (not shown). The POP data PO2a in which the POP data PO2 selected from the included POP data PO1, PO2, and PO3 is enlarged is displayed in the news information H34. The news information H34 including the POP data which is important for POP appeal is positioned in the upper portion of the Web page H3, and the user is able to confirm this information before confirming the other information.

As shown in FIG. 16, as the Web page with the appeal type as concept appeal, for example, Web page H4 is created. According to the template with the appeal type as concept appeal, the following items are arranged in order vertically from top to bottom in the Web page H4, main image H41, store name H42, slogan H43, sub image H44, store introduction H45, gallery (image data) H46, menu information (not shown), news information (not shown), calendar information (not shown), and shop information (not shown). The main image information H41, the sub image H44, and the store introduction H45 which are important for concept appeal are positioned in the upper portion of the Web page H4, and the user is able to confirm this information before confirming the other information.

Next, with reference to FIG. 17, the Web page update proposal process executed in the Web page management server 10 is described. The Web page update proposal process is a process in which the update of the template (appeal type) of the Web page data is proposed according to the status of the Web page data being released for the user (restaurant). The process is repeatedly executed for every predetermined term (for example, one day).

In the Web page management server 10, if the present date/time information obtained from the clock 17 shows that the predetermined term to execute the Web page update proposal process passed, this becomes the trigger to read out the Web page update management program P2 from the memory 15 and to deploy the Web page update management program P2 in the RAM 13. The CPU 11 executes the Web page update management process in coordination with the Web page update management program P2.

First, as shown in FIG. 17, with reference to the event information of the Web page posted information 56 in the memory 15, the CPU 11 determines whether there is the Web page (Web page ID 51) in which the date of the event shown in the event information is equal to or within a predetermined number of days from the present date/time information obtained from the clock 17 (step S41). If the Web page shows the event held on the date equal to or within a predetermined number of days (step S41; YES), the CPU 11 refers to the template table 40 in the memory 15, and determines whether the appeal type 42 corresponding to the template ID 52 in the Web page ID 51 of the Web page showing the event held on the date equal to or within a predetermined number of days is an appeal type other than the event appeal (step S42).

If the appeal type is the appeal type other than the event appeal (step S42; YES), the CPU 11 creates e-mail to propose to update the template corresponding to the Web page data which is created and being released to the template for event appeal. The CPU 11 refers to the user table 30 in the memory 15 to transmit the created e-mail to the e-mail address 37 described in the Web page information 31 corresponding to the obtained Web page ID 51 (step S43) . With this, the CPU 11 ends the Web page update proposing process.

If there is no Web page showing the event held on the date equal to or within a predetermined number of days (step S41; NO), or the appeal type is the event appeal (step S42; NO), the CPU 11 refers to the POP ID 55 in the obtained Web page posted information 56 and determines whether there is a Web page (Web page ID 51) including a registered POP data number (number of POP IDs counting the POP ID 55) equal to or more than a predetermined number (step S44). If there is no Web page in which the registered POP data number is equal to or more than a predetermined number (step S44; NO), the Web page update proposal process ends.

If the registered POP data number is equal to or larger than a predetermined number (step S44; YES), the CPU 11 refers to the template table 40 in the memory 15, and determines whether the appeal type 42 corresponding to the template ID 52 of the Web page ID 51 for the Web page with the POP data number equal to or larger than the predetermined number is the appeal type other than the POP appeal (step S45). If the appeal type is the POP appeal (step 45; NO), the Web page update proposal process ends.

If the appeal type is the appeal type other than the POP appeal (step S45; YES), the CPU 11 creates e-mail to propose to update the template corresponding to the Web page data created and being released to the template for the POP appeal. The CPU 11 refers to the user table 30 in the memory 15 to transmit the created e-mail to the e-mail address 37 in the Web page ID 35 corresponding to the obtained Web page ID 51 and transmits the created e-mail (step S46). With this, the CPU 11 ends the Web page update proposal process.

If the change of the template (appeal type) is proposed to the user in steps S43 and S46, for example, the user starts the Web page data management process in the Web page creation supporting system 1. Through input by touching the Web page setting button 110 in step S8, the template (appeal type) of the Web page data being released in step S9 is updated to the template with the proposed appeal type.

According to the present embodiment, the Web page management server 10 includes a CPU 11 which displays on the display 24 a plurality of templates according to the appeal type in the Web page, and which displays as a preview on the display 24 a Web page in which posted information (basic information, image data, contents information (including POP data) and detailed information) which is to be posted on the Web page is applied to the template with the appeal type selected from the plurality of templates.

Therefore, the template for each appeal type can be selected freely to match the purpose. The Web page using the selected template can be easily confirmed in advance.

In the plurality of templates, the order of the positions in which the plurality of pieces of information are posted is different according to the appeal type. Therefore, the order of the positions of the posted information in the Web page can be easily confirmed in advance.

The CPU 11 displays on the display 24 the style (color scheme) corresponding to each of the plurality of templates and displays as a preview on the display 24 the Web page in which the posted information posted in the Web page is applied to the template corresponding to the selected appeal type and style (color scheme). Therefore, the style (color scheme) of the appeal type for the Web page can be easily confirmed in advance. The style may be at least one among the color scheme, the size of the character, the font, and the background image.

If the style (color scheme) is selected, the CPU 11 displays on the display 24 the template corresponding to the selected style (color scheme). Therefore, the template for each style (color scheme) of the appeal type for the Web page can be easily confirmed by sight, and the style (color scheme) of the predetermined appeal type for the Web page can be confirmed in advance.

The CPU 11 creates the Web page data based on the Web page displayed as a preview. Therefore, the Web page data using the predetermined appeal type template can be created, and the Web page can be easily released by storing the created Web page data in the place to be released.

In response to the timing that a predetermined occasion occurs (equal to or within a predetermined number of days before an event, equal to or more than a predetermined number of registered POP data), the CPU 11 proposes updating the template of the created Web page data to a template with the appeal type corresponding to the occasion. Therefore, the Web page data can be easily updated to the template with the suitable appeal type. The method of appeal is not limited to notification by e-mail and can be a push notification on the terminal apparatus 20 or any other method of proposal.

In the above description, a non-volatile memory such as a flash memory is used as a computer readable medium including a program regarding the present invention but the present invention is not limited to the above example. Portable recording media such as a CD-ROM or a memory card can be used as other computer-readable media. As the medium to provide the data of the program regarding the present invention, a carrier wave can also be applied to the present invention.

The description according to the present embodiment is one example of the Web page creation supporting apparatus and program of the present invention but the present invention is not limited to the above.

For example, according to the above-described embodiment, the information regarding reservation through the internet or information regarding the Social Networking Service (SNS) is not positioned in the Web page data or the template, but the embodiments are not limited. The information regarding the reservation through the internet or information regarding the SNS or other posted information can be positioned in the Web page data and the template.

According to the above-described embodiment, the configuration to create Web page data for a restaurant is described, but the present invention is not limited to the above. The configuration to create the Web page data as described in the embodiment can be applied to other industries other than restaurants.

The detailed configuration and the detailed operation in the components of the Web page creation supporting system 1 according to the present embodiment can be suitably modified without leaving the scope of the present invention.

Although various embodiments are described, the scope of the present invention is not limited to the above-described embodiments, and the present invention includes the scope described in the attached claims and its equivalents.

## Claims

1. A Web page creation supporting apparatus comprising:
a first display control unit which displays a plurality of templates for appeal types in a Web page; and
a second display control unit which displays a preview of a Web page in which posted information to be posted in the Web page is applied to the template for the appeal type selected from the plurality of templates.

2. The Web page creation supporting apparatus according to claim 1, wherein an order of positions of the plurality of posted information is different according to the appeal type in the plurality of templates.

3. The Web page creation supporting apparatus according to claim 1 or 2, wherein,
the first display control unit displays a plurality of styles corresponding to each of the plurality of templates, and
the second display control unit displays a preview of the Web page in which the posted information to be posted in the Web page is applied to the template corresponding to the selected appeal type and style.

4. The Web page creation supporting apparatus according to claim 3, wherein the style is at least one among a color scheme, a character size, a font, and a background image.

5. The Web page creation supporting apparatus according to claim 3 or 4, wherein, in response to selecting the style, the first display control unit displays a template corresponding to the selected style.

6. The Web page creation supporting apparatus according to any one of claims 1 to 5, further comprising a creation unit which creates Web page data based on the Web page displayed as the preview.

7. The Web page creation supporting apparatus according to claim 6, further comprising a proposing unit which, in response to a timing of a predetermined occasion, proposes updating the template of the created Web page data to a template with an appeal type corresponding to the occasion.

8. A program for controlling a computer to perform the following functions:
a first display control unit which displays a plurality of templates for appeal types in a Web page; and
a second display control unit which displays a preview of a Web page in which posted information to be posted in the Web page is applied to the template for the appeal type selected from the plurality of templates.

9. The program according to claim 8, wherein an order of positions of the plurality of posted information is different according to the appeal type in the plurality of templates.

10. The program according to claim 8 or 9, wherein,
the first display control unit displays a plurality of styles corresponding to each of the plurality of templates, and
the second display control unit displays a preview of the Web page in which the posted information to be posted in the Web page is applied to the template corresponding to the selected appeal type and style.

11. The program according to claim 10, wherein the style is at least one among a color scheme, a character size, a font, and a background image.

12. The program according to claim 10 or 11, wherein, in response to selecting the style, the first display control unit displays a template corresponding to the selected style.

13. The program according to any one of claims 8 to 12, further comprising a creation unit which creates Web page data based on the Web page displayed as the preview.

14. The program according to claim 13, further comprising a proposing unit which, in response to a timing of a predetermined occasion, proposes updating the template of the created Web page data to a template with an appeal type corresponding to the occasion.
